## Europäisches Patentamt

## European Patent Office

## Office européen des brevets

(11) Veröffentlichungsnummer: **0 242 669**
**B1**

(12) ## EUROPÄISCHE PATENTSCHRIFT

(45) Veröffentlichungstag der Patentschrift:
20.12.89

(51) Int. Cl.⁴: **F28D 15/02, B01D 19/00**

(21) Anmeldenummer: 87104966.4

(22) Anmeldetag: 03.04.87

(54) Integrierter Kapillarverdampfer als wärmeaufnehmendes Element eines Thermalkreislaufs.

(30) Priorität: 24.04.86 DE 3613802

(43) Veröffentlichungstag der Anmeldung:
28.10.87 Patentblatt 87/44

(45) Bekanntmachung des Hinweises auf die Patenterteilung:
20.12.89 Patentblatt 89/51

(84) Benannte Vertragsstaaten:
DE FR GB IT NL

(56) Entgegenhaltungen:
DE-A- 2 120 475
DE-A- 2 515 753
FR-A- 1 590 963
FR-A- 2 079 224
FR-A- 2 106 918
FR-A- 2 216 537
FR-A- 2 380 520
US-A- 3 523 408
US-A- 3 613 778
US-A- 3 844 342
US-A- 3 933 448

Francis J. Stenger,"Experimental Feasibility Study of Water-filled Capillary-pumped Heat-transfer Loops", Lewis Research Center, Cleveland, Ohio, 196

(73) Patentinhaber: DORNIER GMBH, Postfach 1420,
D-7990 Friedrichshafen 1(DE)

(72) Erfinder: Kreeb, Helmut, Dr., Von Lassbergstrasse 19,
D-7758 Meersburg(DE)
Erfinder: Wulz, Hans-Georg, Dr., Urnau 17,
D-7774 Deggenhausertal(DE)

(74) Vertreter: Landsmann, Ralf, Dipl.-Ing., c/o DORNIER GMBH Postfach 1420, D-7990 Friedrichshafen 1(DE)

ACTORUM AG

**Beschreibung**

Die Erfindung betrifft einen integrierten Kapillarverdampfer als wärmeaufnehmendes Element eines Kühlkreislaufs.

Zur thermalen Regelung grösserer Raumfahrtprojekte werden zur Zeit Zwei-Phasen-Flüssigkeitskreisläufe (TPF) entwickelt. Die Abwärme von Nutzlasten oder Bordeinrichtungen wird über wärmeaufnehmende Komponenten, sogenannte "Cold Plates" bzw. Wärmetauscher, in den Kreislauf eingekoppelt, wobei das Arbeitsmedium verdampft und die Abwärme in Form von Verdampfungswärme mit dem Dampf zu einer für mehrere Komponenten zentral liegenden Wärmesenke (Radiator oder Wärmetauscher) transportiert wird.

Der Antransport des flüssigen Arbeitsmediums erfolgt entweder mit einer mechanischen Pumpe, oder durch die Wirkung einer Kapillarstruktur, die in einem bestimmten Typ von "Cold Plate" eingebaut ist.

Das letztere Prinzip, bekannt aus Francis J. Stenger, EXPERIMENTAL FEASIBILITY STUDY OF WATER-FILLED CAPILLARY-PUMPED HEAT-TRANSFER LOOPS, Lewis Research Center, Cleveland, Ohio, 1966, bringt wesentliche Vorteile. Unter anderem ist ein kapillargepumptes Thermalsystem, neben seiner Unabhängigkeit von einer mechanischen Pumpe und damit seiner Unabhängigkeit von elektrischer Energie, selbstregulierend. Dies bedeutet, dass für wechselnd auftretende Wärmelasten kein separates Regelungssystem notwendig ist. Die Energie zum Betrieb eines solchen Kreislaufs wird aus einem Teil der Abwärme bezogen.

Bekannt aus der Schrift von Francis J. Stenger ist auch die Vorgehensweise, Rillen mit rechteckigen oder dreieckigen Profilen in eine Wandfläche einzuarbeiten, in denen das Arbeitsmedium als Flüssigkeitsfilm (Meniskus) anliegt und dort verdampft wird. Der Dampf strömt durch Bohrungen, die sich in der Deckplatte befinden, und fließt von dort durch einen Sammelkanal in das Dampfrohr, das zur Wärmesenke führt.

Aus der US-A 3 523 408 sind Kunststoffe wie Polyethylen oder Polytetrafluorethylen als Filtermaterialien für einen Gasseparator bekannt, der zur Trennung von Gasen und Flüssigkeiten, insbesondere von in Flüssigkeiten enthaltenen Gasen, verwendet wird. Der Separator basiert auf der Kombination zweier Filter, von denen einer von der Flüssigkeit benetzt wird und der andere Filter die Flüssigkeit abstösst.

Aufgabe der Erfindung ist es, die Anzahl der in einem Kühlkreislauf notwendigen Komponenten zu verringern, das System zu vereinfachen und das Gewicht der Kühlanordnung zu reduzieren.

Diese Aufgabe wird durch die Erfindung nach Anspruch 1 gelöst. Das Besondere an der Erfindung ist, dass ein als Filter in der Filtertechnik eingesetzter Werkstoff, nämlich poröser Kunststoff wie PTFE (Polytetrafluorethylen), PE (Polyethylen) oder Polystyrol, mit unterschiedlicher Porenweite, in der Regel 1 bis 40 mm, dazu verwandt wird, die drei Funktionen der drei integrierten Komponenten

a) Flüssigkeitstransport
b) Flüssigkeitsspeicherung (Reservoir)
c) Gasabscheidung

in sich zu vereinigen, und damit zu einer Vereinfachung des Systems erheblich beizutragen.

Die Verwendung dieser Materialien als Kapillarstruktur in einem TPF-Verdampfer ("two-phase-flow"-Verdampfer) macht die Realisierung eines "Integrierten Verdampfers" erst möglich. Eine Ausgestaltung ist Bestandteil des Unteranspruchs.

Der gesamte verbleibende Kühlkreislauf besteht aus dem Verdampfer, den zu- und abführenden Rohrleitungen und der Wärmesenke (Kondensator). Die hierdurch erreichbare Raum- und Gewichtsersparnis macht die Erfindung besonders für den Luft- und Raumfahrtsektor wesentlich, da hier jede Art von Gewichtsreduzierung von besonderem Interesse ist.

Die Erfindung wird anhand von Figuren nachfolgend näher erläutert.

Es zeigen:

Figur 1 einen Kapillarkreislauf bekannter Bauart,

Figur 2 eine schematische Darstellung der Erfindung in Aufsicht und Vorderansicht,

Figur 3 das in die Deckplatte eingearbeitete Rillenmuster, hier in der Form dreieckiger Profile,

Figur 4 das Ende des Abscheiderohres, das in die Kapillarstruktur hineinragt.

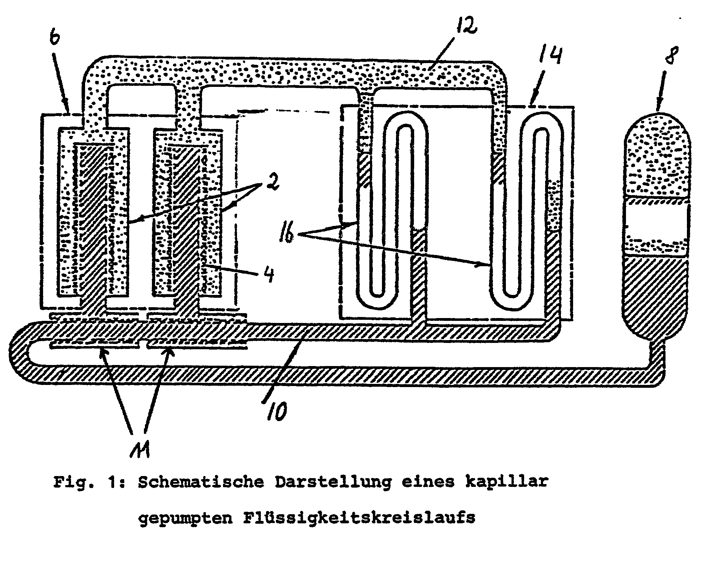

In Figur 1 ist ein kapillarer Thermalkreislauf schematisch dargestellt. Er enthält neben dem Kapillarverdampfer 2 mit poröser Kapillarstruktur 4, der die Wärme der Wärmequelle 6 aufnimmt, noch ein Flüssigkeitsreservoir 8 zum Ausgleich des Flüssigkeitsinventars 10 des Verdampfers 2 bei wechselnder Wärmelast, sowie eine Gasfalle 11, zur Abscheidung von nicht kondensierten (Dampfblasen) oder nicht kondensierbaren (Verunreinigungen) Anteilen im Arbeitsmedium, die die Kapillaren und damit den Flüssigkeitstransport blockieren könnten. Der entstehende Dampf 12 wird zu einer Wärmesenke 14 geleitet, wo er in Kondensatoren 16 wieder zur Flüssigkeit 10 kondensiert. Resultierend betrachtet besticht ein kapillarbetriebenes Thermalsystem durch seine Einfachheit und seinen guten Wirkungsgrad.

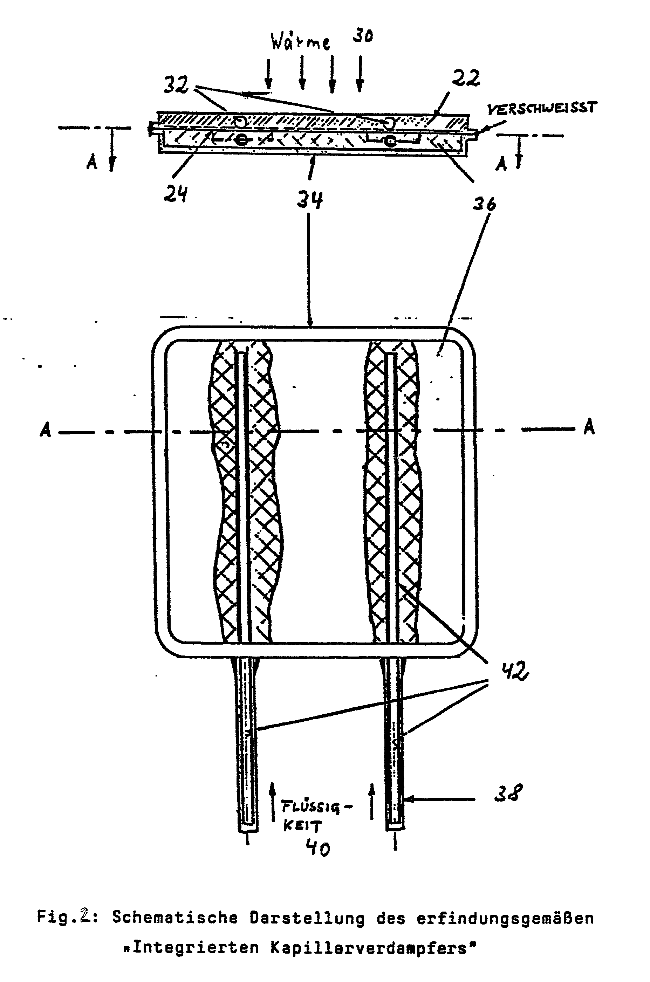

Die von den zu kühlenden Objekten ausgehende Wärme wird zunächst von einer Deckplatte 22 aufgenommen, siehe Figur 2.

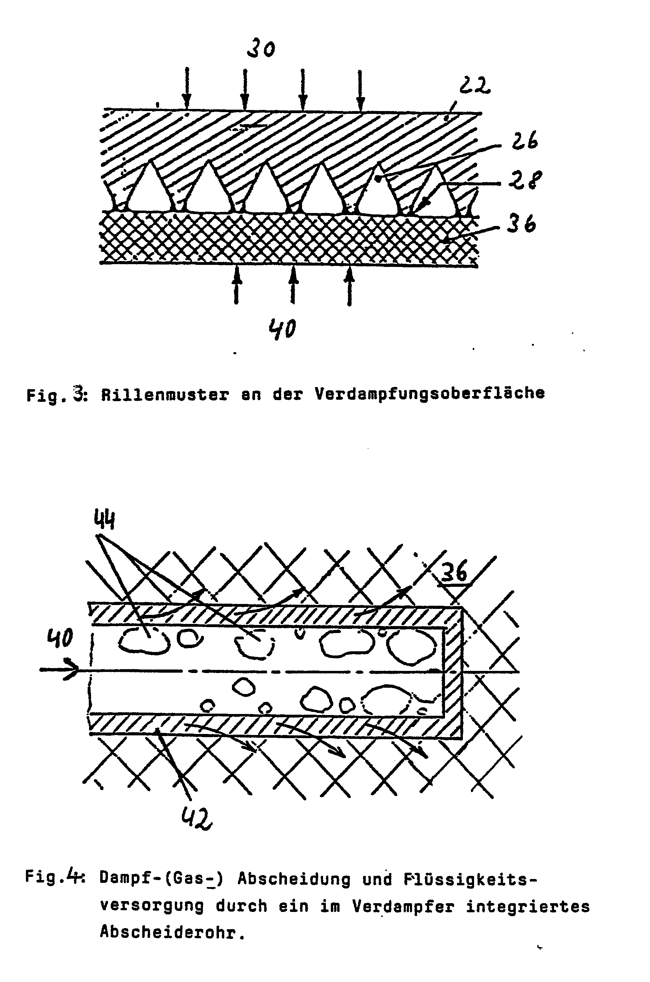

Die der Wärmezuführung entgegengesetzte Seite ist mit einem geometrischen Rillenflächenmuster 24 überzogen, wobei die Rillen rechteckiges oder dreieckiges Profil 26 aufweisen können, siehe Figur 3. In den Rillen befindet sich ein benetzender Flüssigkeitsfilm (Meniskus 28), der durch die einfliessende Wärme 30 verdampft wird. Der Dampf fließt durch die Rillen in ein in der Deckplatte befindliches Kanalsystem 32. Die Kanäle führen in ein Dampfrohr, das den Dampf zur Wärmesenke (Kondensator) leitet.

Mit der Deckplatte 22 ist ein voluminöses Bett 34 verschweißt, in welchem sich ein Material mit Kapillarstruktur 36 befindet. An das Bett 34 werden eine oder mehrere Zuleitungen aus Aluminiumrohr 38 befestigt, durch die die Flüssigkeit 40 aus Kondensator zurückgeführt wird. In diesen Ansaugleitungen befinden sich Rohre aus porösem Kunststoff 42, die in die Kapillarstruktur 36 des Verdampfers münden.

Unter den genannten Materialien eignen sich PTFE und PE mit Porenweiten im angegebenen Bereich ganz besonders zum Flüssigkeitstransport von Freon. Beide Materialien erzielten bei Steigmessungen von Freon sehr gute Werte (ca. 60 mm nach 10 min, 130 mm nach 30 min). Sie weisen eine Porosität von 40 % (PE) bis 70 % (PTFE) auf, per Definition das Verhältnis Porenvolumen zu geometrischem Volumen. Ein Block von beliebiger Gestalt (diese Materialien lassen sich spanabhebend bearbeiten) und beliebigem Volumen hat sowohl eine Transportfunktion infolge der Kapillarwirkung, als auch eine Speicherfunktion oder Reservoirfunktion für das Arbeitsmedium. Beispielsweise hat ein Block aus porösem PTFE von 1 dm³ Volumen eine Speicherkapazität von bis zu 0,7 l Freon. Durch die Kapillarstrukturen des Speichermaterials wird der Rillenoberfläche der Deckplatte zur Bildung des stetig abdampfenden Flüssigkeitsfilms ständig neue Flüssigkeit 40 zugeführt.

Ein oder mehrere Rohre aus porösem Kunststoff 42, die sich in der Ansaugleitung 38 befinden und in die Kapillarstrukturen 36 des Verdampfers münden, besorgen die Gasabscheidung. Die Flüssigkeitsversorgung erfolgt über den Kapillartransport dieses oder dieser Rohre, siehe Figur 4. Nicht kondensierte Dampfblasen 44 sammeln sich im Innern des Rohres 42 und lösen sich bei geringerer Wärmelast wieder auf. Diese Methode gewährleistet eine sichere Gasabscheidung. Die Gasabscheiderrohre bestehen aus feinporigem Kunststoff, z.B. PTFE, mit 5 bis 1 µm Porenweite. Das Material ist in beliebiger Porenweite innerhalb des angegebenen Rahmen im Handel erhältlich. Die Porenweite des Materials, das als Speicher dient, ist dabei grösser als die Porenweite der Gasabscheiderohre. So können Dampf, Gasblasen und sonstige Verunreinigungen mit einem grösseren Durchmesser als 5 bis 1 µm, die die Kapillarstruktur blockieren könnten, erst gar nicht in die Struktur eindringen.

Somit ist eine Möglichkeit gefunden worden, mehrere Teile eines Kühlsystems zu einem Teil zusammenzufügen, wobei sich eine Ersparnis an Raum und Gewicht ergibt.

Gleichzeitig kann der Kapillarverdampfer im Gegensatz zur bisherigen Zylinderform so gestaltet werden, dass er sich jeder geometrischen Form einer zu kühlenden Einrichtung anpasst. Hier ist insbesondere an die Gestaltung als flache Platte gedacht, die eine grosse wärmeübernehmende Fläche aufweist.

## Patentansprüche

1. Wärmeaufnehmendes Element eines selbstversorgenden, kapillargepumpten Kühlkreislaufs, gekennzeichnet durch die Verwendung eines porösen Kunststoffs zur Integrierung der Komponenten für Flüssigkeitstransport, Flüssigkeitsspeicherung und Gasabscheidung.

2. Komponente nach Anspruch 1, dadurch gekennzeichnet, dass der poröse Kunststoff Polytetrafluorethylen, Polyethylen oder Polystyrol ist.

## Claims

1. Heat absorbing element of a self-supplying, capillary-pumped cooling cycle, characterised by the use of a porous plastic for the integration of the components for liquid transport, liquid storage and gas separation.

2. Component according to claim 1, characterised in that the porous plastic is polytetrafluoroethylene, polyethylene or polystyrene.

## Revendications

1. Elément absorbant la chaleur d'un circuit de refroidissement à pompage capillaire, à auto-alimentation, caractérisé par l'utilisation d'un matériau synthétique poreux en vue de l'intégration des composants pour un transport de liquide, un stockage de liquide et une séparation de gaz.

2. Elément selon la revendication 1, caractérisé en ce que le matériau synthétique poreux est du polytétrafluoréthylène, du polyéthylène ou du polystyrène.

Fig. 1: Schematische Darstellung eines kapillar
gepumpten Flüssigkeitskreislaufs

Fig.2: Schematische Darstellung des erfindungsgemäßen »Integrierten Kapillarverdampfers«

Fig. 3: Rillenmuster an der Verdampfungsoberfläche

Fig. 4: Dampf-(Gas-) Abscheidung und Flüssigkeitsversorgung durch ein im Verdampfer integriertes
Abscheiderohr.